# EUROPÄISCHE PATENTANMELDUNG

(11) **EP 2 840 429 A1**
(43) Veröffentlichungstag der Anmeldung: **25.02.2015**
(21) Anmeldenummer: 14178694.7
(22) Anmeldetag: 28.07.2014
(51) Int. Cl.: G02B 21/36, H04N 5/14

(54) **Mikroskop**

(30) Priorität: 19.08.2013 DE 102013216409
(71) Anmelder: Carl Zeiss Microscopy GmbH, 07745 Jena (DE)
(72) Erfinder: Geißler, Enrico, 07749 Jena (DE); Gaiduk, Alexander, 07745 Jena (DE); Stehr, Dominik, 07745 Jena (DE); Jäger, Markus, 04420 Markranstädt (DE)
(74) Vertreter: Müller, Silke

(57) **Zusammenfassung**

Es wird ein Mikroskop mit einer eine vergrößernde Abbildungsoptik (2) und ein Bildmodul (3) aufweisenden Aufnahmeeinheit (4) zum Aufnehmen von Bildern einer Probe (6) mit einer ersten Bildfrequenz und
einer digitalen Auswerteeinheit (7), der die aufgenommenen Bilder zugeführt sind, die eine vorbestimmte Bildverarbeitung basierend auf den aufgenommenen Bildern durchführt und als Ergebnis Ausgabebilder (B) mit einer zweiten Bildfrequenz, die kleiner als die erste Bildfrequenz oder gleich der ersten Bildfrequenz ist, erzeugt und zur Darstellung an eine Ausgabeeinheit (11) übertragen kann, bereitgestellt.

## Beschreibung

Die vorliegende Erfindung betrifft ein Mikroskop, insbesondere ein Digitalmikroskop.

Solche Mikroskope werden häufig zur Materialuntersuchung verwendet. Dabei wird in der Regel ein Bild der Probe erzeugt und dargestellt.

Aufgabe der Erfindung ist es, ein verbessertes Mikroskop zur Verfügung zu stellen.

Die Aufgabe wird durch ein Mikroskop mit einer eine vergrößernde Abbildungsoptik und ein Bildmodul aufweisenden Aufnahmeeinheit zum Aufnehmen von Bildern einer Probe mit einer ersten Frequenz (bzw. ersten Bildfrequenz) und einer digitalen Auswerteeinheit gelöst, der die aufgenommenen Bilder zugeführt sind, die eine vorbestimmte Bildverarbeitung der aufgenommenen Bilder durchführt und als Ergebnis Ausgabebilder mit einer zweiten Frequenz (bzw. zweiten Bildfrequenz), die kleiner als die erste Frequenz oder gleich der ersten Frequenz ist, erzeugt und zur Darstellung an eine Ausgabeeinheit übertragen kann.

Mit dem erfindungsgemäßen Mikroskop werden somit die Bilddaten schneller aufgenommen als sie dargestellt werden, so dass dadurch weitere Funktionen bereitgestellt werden können.

Insbesondere weist die digitale Auswerteeinheit zumindest ein FPGA (field programmable gate array, im (Anwendungs-)Feld programmierbare (Logik-)Gatter-Anordnung) auf. Ein FPGA ist somit ein integrierter Schaltkreis der Digitaltechnik, bei dem durch Programmierung von Strukturvorschriften die grundlegende Funktionsweise einzelner universaler Blöcke und deren Verschaltung untereinander festgelegt werden kann. Man kann daher auch von einer Konfiguration des FPGA sprechen. Mit einem solchen FPGA kann die notwendige Rechenleistung zur Verfügung gestellt werden, um die gewünschte Bildverarbeitung durchzuführen. Insbesondere ist eine so schnelle Verarbeitung möglich, dass die Ausgabebilder in Echtzeit dargestellt werden können.

Bei dem erfindungsgemäßen Mikroskop kann das Bildmodul einen Bildsensor mit einer nativen Schnittstelle umfassen, wobei die Bildsensordaten (also die Daten des Bildsensors) über die native Schnittstelle direkt an die FPGA übertragen werden. Damit kann eine schnelle Bildverarbeitung sichergestellt werden.

So kann z.B. die zweite Frequenz mindestens 24 Hz oder 25 Hz betragen. Des weiteren ist die erste Frequenz bevorzugt mindestens doppelt so groß wie die zweite Frequenz und kann im Bereich von bis zu 300 Hz liegen.

Ferner kann die digitale Auswerteeinheit zumindest einen digitalen Signalprozessor aufweisen. Dies erhöht wiederum die Rechenleistung für die Bildverarbeitung und Erzeugung der Ausgabebilder.

Die Auswerteeinheit ist insbesondere als im Mikroskop vorgesehene Hardware ausgebildet und ist insbesondere kein herkömmlicher Computer, sondern eine Spezial-Hardware, die für die vorbestimmte Bildverarbeitung ausgelegt und optimiert ist.

Die digitale Auswerteeinheit kann basierend auf zumindest zwei aufgenommenen Bildern ein (einzelnes) Ausgabebild erzeugen. Insbesondere kann sie z.B. HDR-Ausgabebilder erzeugen.

Das erfindungsgemäße Mikroskop kann einen Probentisch zum Haltern der Probe und eine Bewegungseinheit zur Durchführung einer Relativbewegung von Probentisch und Aufnahmeeinheit aufweisen, wobei die Bildaufnahme mit der ersten Frequenz und die Relativbewegung miteinander synchronisiert sind. Ferner ist es möglich, dass die digitale Auswerteeinheit mehrere Bildaufnahmemodi zur Auswahl zur Verfügung stellt, die sich durch die durchzuführende vorbestimmte Bildverarbeitung unterscheiden.

Die Ausgabeeinheit kann Bestandteil des Mikroskops sein. Ferner kann das Mikroskop noch eine Eingabeeinheit aufweisen.

Des weiteren kann die digitale Auswerteeinheit auch als Steuereinheit für das Mikroskop dienen. Insbesondere kann die digitale Auswerteeinheit die Relativbewegung zwischen Probentisch und Aufnahmeeinheit, die Beleuchtungsbedingung, die optische Vergrößerung, oder sonstige Einstellungen des Mikroskopes steuern. Auch kann sie die Aufnahmeeinheit und insbesondere das Bildmodul steuern.

Das Bildmodul kann eine oder mehrere Bildsensoren aufweisen. Bei dem bzw. den Bildsensoren kann es sich z.B. um einen CCD-Sensor oder einen CMOS-Sensor handeln.

Die digitale Auswerteeinheit kann als vorbestimmte Bilddatenverarbeitung z.B. eine Dynamikkompression, einen Weißabgleich, eine Autofokussierung, eine Bildstabilisierung, eine Aufnahme eines z-Stapels von Bildern (also mehrere Aufnahmen mit unterschiedlichen Fokusstellungen) eine Bilddarstellung mit erhöhter Schärfentiefe, verschiedene Kontrastverfahren, etc. realisieren bzw. zur Auswahl zur Verfügung stellen. Insbesondere können auch verschiedene dieser Bildverarbeitungsmodi miteinander kombiniert zur Verfügung gestellt werden.

Das Mikroskop kann weitere dem Fachmann bekannte Elemente aufweisen, die zum Betrieb des Mikroskops notwendig sind.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische Darstellung einer Ausführungsform des erfindungsgemäßen Mikroskops,
- Fig. 2: eine schematische Darstellung zur Erläuterung des Betriebs des erfindungsgemäßen Mikroskops,
- Fig. 3: eine weitere Darstellung zur Erläuterung des Betriebs des erfindungsgemäßen Mikroskops, und
- Fig. 4: eine schematische Darstellung von Teilen der digitalen Auswerteeinheit 7 des Mikroskops gemäß Fig. 1.

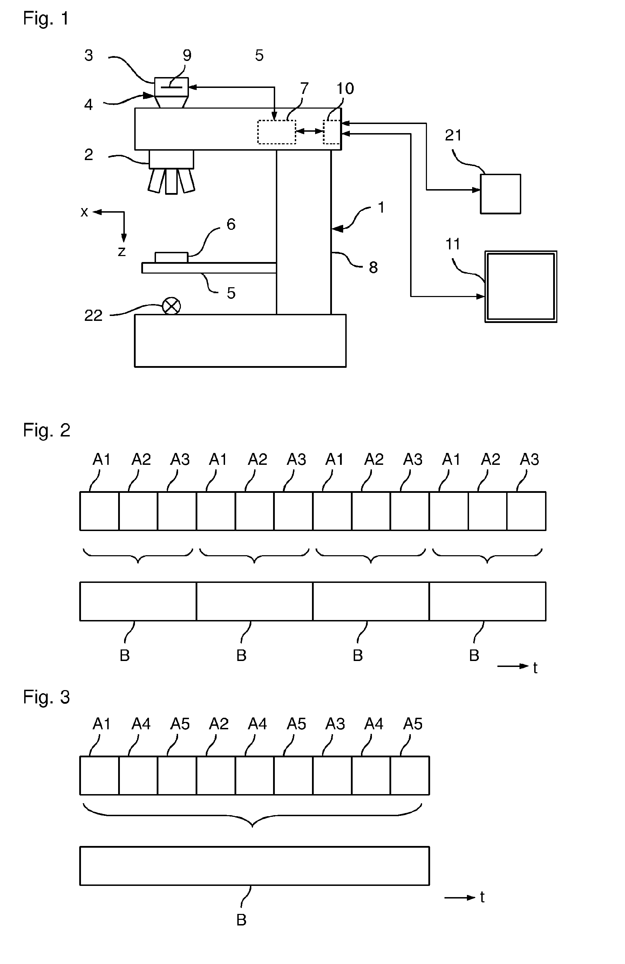

Bei der in Fig. 1 gezeigten Ausführungsform umfaßt das erfindungsgemäße Mikroskop (bzw. Digitalmikroskop) 1 eine eine vergrößernde Abbildungsoptik 2 und ein Bildmodul 3 aufweisende Aufnahmeeinheit 4, einen Probentisch 5 zum Haltern einer Probe 6 sowie eine digitale Auswerteeinheit 7. Des weiteren umfaßt das Mikroskop 1 eine durch den stativartigen Aufbau angedeutete Bewegungseinheit 8, die den Probentisch 5 relativ zur Abbildungsoptik 2 in z-Richtung, in x-Richtung und in der Richtung senkrecht zur Zeichenebene bewegen kann, sowie eine Beleuchtungseinheit 22 zur Beleuchtung der Probe 6.

Für die Abbildungsoptik 2 ist hier schematisch ein Objektivrevolver mit drei Objektiven eingezeichnet. Das Bildmodul 3 enthält einen Bildsensor 9 (z.B. einen CCD-Sensor oder einen CMOS-Sensor) und ist mit der digitalen Auswerteeinheit 7 verbunden.

Im Betrieb des Mikroskopes 1 werden vom Bildmodul 3 Bilder der Probe 6 mit einer ersten Frequenz aufgenommen und werden die Bilder (bzw. die digitalen Bilddaten) der Auswerteeinheit 7 zugeführt, die eine digitale Bildbearbeitung durchführt. Ausgabebilder mit einer zweiten Frequenz, die kleiner ist als die erste Frequenz, werden von der Auswerteeinheit 7 erzeugt und über eine Schnittstelle 10, die Bestandteil der Auswerteeinheit 7 sein kann, an eine Ausgabeeinheit 11 (hier z.B. ein Bildschirm) abgeben, die die Ausgabebilder dann mit der zweiten Frequenz darstellen kann.

Bei dem erfindungsgemäßen Mikroskop 1 wird somit die Datenerfassung (Aufnahme der Bilder) sowie die Datenverarbeitung in der digitalen Auswerteeinheit 7 mit einer höheren Frequenz (bzw. höheren Bildfrequenz) durchgeführt als die Frequenz bzw. Bildfrequenz, mit der dann die Ausgabebilder erzeugt werden. Dies kann dazu benutzt werden, um die Funktionalität des erfindungsgemäßen Mikroskops zu erweitern. So können beispielsweise die Ausgabebilder als sogenannte HDR-Bilder (Bilder mit hohem Dynamikumfang) erstellt werden, indem beispielsweise aus jeweils drei aufeinanderfolgenden Aufnahmen A1, A2 und A3 (Fig. 2) ein Ausgabebild B berechnet und erzeugt wird. In Fig. 2 sind die aufgenommenen Bilder A1, A2 und A3 sowie die Ausgabebilder B entlang einer Zeitachse t schematisch dargestellt. Natürlich werden die einzelnen Bilder A1-A3 bevorzugt mit unterschiedlichen Belichtungsbedingungen (beispielsweise Belichtungszeiten) aufgenommen, um dann die gewünschten HDR-Ausgabebilder B berechnen zu können. Die Ausgabebilder B können somit in Echtzeit erzeugt und als Video bzw. Videostrom über die Ausgabeeinheit 11 in Echtzeit mit der zweiten Frequenz dargestellt werden.

Es ist auch möglich, mehrere Funktionalitäten zu kombinieren. So können z.B. weiterhin HDR-Bilder B mit einer gewünschten zweiten Frequenz aus den Aufnahmen A1-A3 erzeugt werden. Gleichzeitig kann innerhalb der Zeit für die Bildaufnahmen für jedes HDR-Bild weitere Aufnahmen bzw. Bilder A4 für die Durchführung einer automatischen Fokussierung und weitere Aufnahmen bzw. Bilder A5 für die Durchführung einer Bildstabilisierung verwendet werden, so dass die Bildqualität der HDR-Ausgabebilder B weiter erhöht ist. Dies ist schematisch in Fig. 3 dargestellt.

Die dafür nötige Rechenleistung für die digitale Auswerteeinheit 7 kann erfindungsgemäß bereitgestellt werden, da die Auswerteeinheit 7 bevorzugt zumindest ein FPGA 12 (field programmable gate array, im (Anwendungs-)Feld programmierbare (Logik-)Gatter-Anordnung) und bevorzugt zumindest einen digitalen Signalprozessor 13 aufweist. Durch die Verwendung des FPGA 12 kann die gewünschte Funktionalität bereitgestellt werden und kann insbesondere über eine schematisch dargestellte Eingabeeinheit 21 durch den Benutzer einer Auswahl einer von mehreren Funktionalitäten durchgeführt und dann unmittelbar auch realisiert werden. Die Eingabeeinheit 21 kann beispielsweise ein herkömmlicher Computer, ein Tablett, ein Smartphone oder eine sonstige Vorrichtung sein. Die Verbindung zwischen der Eingabeeinheit 21 und der digitalen Auswerteeinheit 7 sowie zwischen der Ausgabeeinheit 11 und der digitalen Auswerteeinheit 7 kann jeweils drahtlos oder drahtverbunden sein.

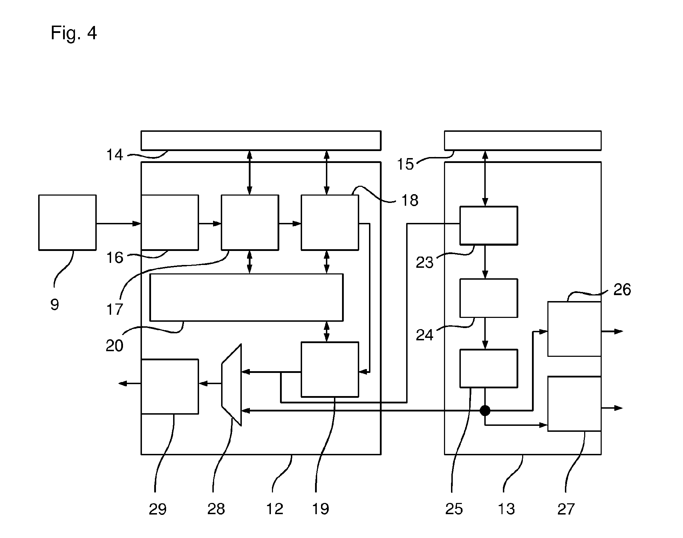

In Fig. 4 ist eine schematische Funktionsdarstellung des FPGA 12 sowie des digitalen Signalprozessors 13 gezeigt, die jeweils auf einen Speicher 14, 15 zugreifen können. Die Daten des Bildsensors 9 werden über eine Einzelbildformateinheit 16 verschiedenen Funktionsblöcken 17, 18, 19 zugeführt, die mit einer Registereinheit 20 und dem Speicher 14 kommunizieren können und die gewünschten Bildbearbeitungen durchführen. Ferner können entsprechende Bearbeitungen in Funktionsblöcken 23, 24, 25 des Signalprozessors 13 durchgeführt werden. Die Daten können dann über verschiedene Schnittstellen ausgegeben werden. Dazu sind im Signalprozessor ein WiFi-Endcoder 26 für eine drahtlose Übertragung, eine HDMI-Formateinheit 27 zur Ausgabe als HDMI-Signal und sind im FPGA 12 ein Logikgatter 28 sowie eine USB3-Formateinheit 29 zur Abgabe der Ausgabebilder über eine USB3-Schnittstelle vorgesehen.

Da die digitale Auswerteeinheit 7 das FPGA 12 und den digitalen Signalprozessor 13 aufweist, ist es möglich, die beschriebene Bilddatenverarbeitung in Echtzeit durchzuführen. Mit einem herkömmlichen Computer ist dies kaum möglich, da auch die meisten Betriebssysteme gar keine Echtzeitbetriebssysteme sind, so dass eine entsprechend schnelle Echtzeitverarbeitung nicht sichergestellt werden kann.

Die digitale Auswerteeinheit 7 ist als separate Hardware-Einheit im erfindungsgemäßen Mikroskop 1 vorgesehen und gibt die gewünschten Ausgabebilder aus.

Darüber hinaus kann die digitale Auswerteeinheit 7 auch als Steuereinheit für das Mikroskop 1 genutzt werden, die z.B. die optische Vergrößerung, die Beleuchtungsbedingungen, die Probentischbewegung oder sonstige Mikroskopeinstellungen steuert.

Mit dem erfindungsgemäßen Mikroskop und insbesondere die digitalen Auswerteeinheit 7 können noch weitere Funktionalitäten bereitgestellt werden. So kann ein automatischer Weißabgleich durchgeführt werden, kann eine Dynamikkompression bei den erzeugten Bildern durchgeführt werden, und kann z.B. ein sogenanntes color co-site sampling durchgeführt werden. Bei einem color co-site sampling wird die Probe mehrmals aufgenommen, wobei zwischen den Aufnahmen der Bildsensor 9 (beispielsweise durch Piezoaktuatoren) um beispielsweise ein Pixel in einer Richtung verschoben wird. Damit ist es dann möglich, eine vollständige Farbinformation für jedes Pixel zu erzielen, da Bildsensoren in der Regel so ausgebildet sind, dass sie einen Farbfilter aufweisen, so dass jedes Pixel z.B. nur eine der drei Grundfarben Rot, Grün oder Blau aufnehmen kann. Durch geeignete Verschiebung des Bildsensors wird dann jeder Bildpunkt durch ein entsprechendes Pixel aufgenommen, so dass alle Farbkanäle an jedem Bildpunkt vollständig aufgenommen werden können.

Ferner ist es möglich, verschiedene Kontrast- und/oder Aufnahmeverfahren zu realisieren, so kann z.B. eine Hellfeldaufnahme, eine Dunkelfeldbeleuchtung, ein Differentialinterferenzkontrast sowie eine segmentierte Beleuchtung durchgeführt werden.

Die erste Frequenz zur Bildaufnahme kann insbesondere ein Vielfaches der zweiten Frequenz sein. Die zweite Frequenz kann beispielsweise zumindest 24 oder 25 oder 30 Hz betragen, die erste Frequenz kann somit zumindest 48, 50, 60 Hz betragen. Es ist auch möglich, dass sie z.B. 100, 150 oder 300 Hz beträgt.

Der hier in Verbindung mit Fig. 1 beschriebene Aufbau des Mikroskops ist rein beispielhaft zu verstehen. Die erfindungsgemäße Ausbildung mittels der digitalen Auswerteeinheit 7 kann bei jedem bekannten Mikroskoptyp realisiert werden. Das hier beschriebene Mikroskop 1 ist bevorzugt für Materialuntersuchungen ausgebildet.

Ferner kann bei dem erfindungsgemäßen Mikroskop mit dem Bildsensor 9 ein größerer Bereich aufgenommen werden als der Bereich der Aufnahme, der dann für die Erzeugung der Ausgabebilder verwendet wird. Diese nicht im Ausgabebild dargestellten Teile der Aufnahme können für weitere Funktionen des Mikroskops eingesetzt werden, wie z.B. die automatische Fokussierung und/oder die automatische Bildstabilisierung.

## Patentansprüche

1. Mikroskop mit
einer eine vergrößernde Abbildungsoptik (2) und ein Bildmodul (3) aufweisenden Aufnahmeeinheit (4) zum Aufnehmen von Bildern einer Probe (6) mit einer ersten Bildfrequenz und
einer digitalen Auswerteeinheit (7), der die aufgenommenen Bilder zugeführt sind, die eine vorbestimmte Bildverarbeitung basierend auf den aufgenommenen Bildern durchführt und als Ergebnis Ausgabebilder (B) mit einer zweiten Bildfrequenz, die kleiner als die erste Bildfrequenz oder gleich der ersten Bildfrequenz ist, erzeugt und zur Darstellung an eine Ausgabeeinheit (11) übertragen kann.

2. Mikroskop nach Anspruch 1, bei dem die digitale Auswerteeinheit (7) zumindest eine FPGA (12) aufweist.

3. Mikroskop nach Anspruch 1 oder 2, bei dem das Bildmodul (3) einen Bildsensor (9) mit einer native Schnittstelle aufweist, wobei die Bildsensordaten über die native Schnittstelle direkt an die FPGA (12) übertragen werden.

4. Mikroskop nach einem der obigen Ansprüche, bei der die digitale Auswerteeinheit (7) zumindest einen digitalen Signalprozessor (13) aufweist.

5. Mikroskop nach einem der obigen Ansprüche, bei dem die digitale Auswerteeinheit (7) als im Mikroskop (1) vorgesehene Hardware ausgebildet ist.

6. Mikroskop nach einem der obigen Ansprüche, bei dem die zweite Bildfrequenz mindestens 24 Hz beträgt.

7. Mikroskop nach einem der obigen Ansprüche, bei dem die erste Bildfrequenz mindestens doppelt so groß wie die zweite Bildfrequenz ist.

8. Mikroskop nach einem der obigen Ansprüche, bei dem die digitale Auswerteeinheit (7) die Ausgabebilder (B) in Echtzeit erzeugt und ausgibt.

9. Mikroskop nach einem der obigen Ansprüche, bei dem die digitale Auswerteeinheit (7) basierend auf zumindest zwei aufgenommenen Bildern (A1, A2, A3) ein Ausgabebild (B) erzeugt.

10. Mikroskop nach einem der obigen Ansprüche, mit einem Probentisch (5) zum Haltern der Probe (6) und einer Bewegungseinheit (8) zur Durchführung einer Relativbewegung von Probentisch (5) und Aufnahmeeinheit (4), wobei die Bildaufnahme mit der ersten Bildfrequenz und die Relativbewegung miteinander synchronisiert sind.

11. Mikroskop nach einem der obigen Ansprüche, bei dem die digitale Auswerteeinheit (7) mehrere Bildaufnahmemodi zur Auswahl zur Verfügung stellt, die sich durch die durchzuführende vorbestimmte Bildverarbeitung unterscheiden.
